# EUROPÄISCHE PATENTSCHRIFT

(11) **EP 3 292 656 B1**
(45) Veröffentlichungstag und Bekanntmachung des Hinweises auf die Patenterteilung: **20.03.2019**
(21) Anmeldenummer: 16720826.3
(22) Anmeldetag: 04.05.2016
(51) Int. Cl.: H04L 12/10

(54) **STEUERELEKTRONIK FÜR EIN LAND- ODER FORSTWIRTSCHAFTLICHES FAHRZEUG**
CONTROL ELECTRONICS FOR AN AGRICULTURAL OR FORESTRY VEHICLE
ÉLECTRONIQUE DE COMMANDE POUR UN VÉHICULE AGRICOLE OU FORESTIER

(30) Priorität: 07.05.2015 DE 102015208495
(43) Veröffentlichungstag der Anmeldung: 14.03.2018
(73) Patentinhaber: Continental Automotive GmbH, 30165 Hannover (DE)
(72) Erfinder: CSABAI, Peter, 1200 Wien (AT); FLEISCHER, Christian, 1020 Wien (AT)
(86) Internationale Anmeldenummer: PCT/EP2016/059974
(87) Internationale Veröffentlichungsnummer: WO 2016/177768

(56) Entgegenhaltungen:
- EP-A1- 2 765 713
- DE-A1- 19 850 869
- DE-A1-102009 052 157
- DE-B3-102010 052 661

## Beschreibung

Die Erfindung betrifft eine Steuerelektronik für ein land- oder forstwirtschaftliches Fahrzeug oder eine land- oder forstwirtschaftliche Maschine, mit Stromanschlüssen zumindest für ein erstes Versorgungsnetz mit einem ersten Bezugspotential und ein zweites Versorgungsnetz mit einem zweiten Bezugspotential und mit zumindest einem Netzwerkanschluss, wobei die Steuerelektronik eine Kommunikationsschaltung, die zur Datenübertragung über den Netzwerkanschluss eingerichtet ist und über das erste Versorgungsnetz versorgt wird, und eine Logikschaltung enthält, die mit der Kommunikationsschaltung gekoppelt ist und zumindest einen Steuerausgang zur Steuerung einer über das zweite Versorgungsnetz versorgten elektrischen Last aufweist, sowie ein Verfahren zum Einschalten einer solchen Steuerelektronik, d.h. zum Einschalten der Stromversorgung der Steuerelektronik.

Moderne Bussysteme für land- und forstwirtschaftliche Fahrzeuge und Maschinen (z.B. die Norm ISO 11783, "ISOBUS") legen zwecks Sicherstellung einer geringen Störanfälligkeit der Kommunikation zwischen den auf einer land- oder forstwirtschaftlichen Zugmaschine oder deren Anhänger montierten elektronischen Steuereinheiten (Electronic Control Unit, ECU) die Implementierung eines Kommunikationssystems (z.B. in Form eines Bussystems) mit potentialfreien Versorgungen (z.B. über eine 9-adrige Busverbindung für ISOBUS) mit folgenden Eigenschaften fest:
- die Anwendung eines ausschließlich zu diesem Zweck dienlichen zweiadrigen Kommunikationsnetzwerks (z.B. eines CAN-Netzwerkes) sowie die zugeordneten Kommunikationsabläufe;
- die Anwendung eines dreiadrigen Bus-Terminierung-Netzwerkes (Terminating Bias Circuit, TBC), das sicher stellt, dass wenn an einen zur Verlängerung des CAN-Busses bestimmten Anschluss kein Gegenstück angeschlossen ist, der Bus ordnungsgemäß terminiert ist, und damit Reflexionen der Datensignale unterdrückt werden;
- die Anwendung von zwei galvanisch getrennten Versorgungsnetzen, von denen das eine für Lasten und Aktuatoren (z.B. bei ISO 11783 sind das "PWR" und "GND" - bis max. 50 Ampere Stromstärke) und das andere (z.B. bei ISO 11783 sind das "ECU_PWR" und "ECU_GND" - bis max. 15 Ampere Stromstärke) für den Logikteil der einzelnen ECU's bestimmt ist, zu dem auch das oben erwähnte Kommunikationsnetzwerk (CAN-Netzwerk) galvanisch gehört; als galvanische Trennung wird hier allgemein nicht nur eine (rein theoretische) vollständige elektrische Trennung, sondern auch eine Trennung mit einer definierten Trennimpedanz bezeichnet.
- die zwei Versorgungsnetze sollen auf der Zugmaschine (in einer Zugmaschinen-ECU oder Traktor-ECU, auch TECU) und am Anhänger (oder "Implement") eine definierte erste Mindest-Trennimpedanz (z.B. bei ISO 11783 zumindest 1 MOhm) sowie im Systembus ("Implementbus") eine definierte zweite Mindest-Trennimpedanz (z.B. bei ISO 11783 zumindest 5 MOhm) aufweisen und dabei auf der Zugmaschine an nur einer Stelle (z.B. am Minuspol einer Batterie) zusammengeführt werden.
oder detaillierter:
- die Masseleitungen (GND und ECU_GND) der zwei Versorgungsnetze laufen ausschließlich zugmaschinenseitig in einem einzigen Punkt (am Minuspol der Batterie) zusammen. Zwecks Vermeidung von Masseschleifen wird anhängerseitig (auf dem Implement) die galvanische Trennung der zwei Versorgungsnetze gefordert. Anhängerseitig wird außerdem eine Mindestimpedanz zwischen GND und ECU_GND von 5 Megaohm gefordert, wenn kein ECU an den Bus angeschlossen ist.
- ECUs, die an einem solchen Kommunikationsbus angeschlossen sind, sollen zwischen ihren GND und ECU_GND Anschlüssen eine Mindestimpedanz von 1 Megaohm aufweisen.

Auf einem mit dieser Art galvanischen Trennung ausgestatteten System (z.B. gemäß ISOBUS) fungiert eine sogenannte Main ECU (auch Traktor-ECU oder kurz TECU) als Koordinator und Überwacher der Systembus-Funktionalität und sorgt dafür, dass
- allen am Systembus (ISOBUS) angeschlossenen ECU Steuerungen ein Zündsignal (auch Klemme_15 Signal) übermittelt wird, wenn der Fahrzeug-Schlüssel auf Stellung EIN ist; die Übermittlung kann über die Stromversorgung selbst oder über den Systembus erfolgen; und
- das Zündsignal (Klemme_15 Signal) für alle am Systembus (ISOBUS) angeschlossenen ECU Steuerungen eine gewisse Mindestdauer (z.B. mindestens zusätzliche 2 Sekunden) lang aktiviert bleibt, nachdem der Fahrzeug-Schlüssel auf Stellung AUS gedreht wurde.

Eine, z.B. an einen ISOBUS angeschlossene, TECU soll außerdem als Gateway fungieren können, d.h. als Kommunikationsschnittstelle zwischen dem Kommunikationsnetzwerk und einer nicht im Kommunikationsnetzwerk eingebundenen, beispielsweise nicht standardkonformen, ECU, die Teil des Gesamtsystems ist.

Bei einer Steuerelektronik für eine elektronische Steuereinheit (ECU), welche den obigen Anforderungen entspricht, ist daher eine galvanische Trennung zwischen dem Kommunikationsnetzwerk und den angeschlossen Leistungsbauteilen erforderlich, d.h. das Kommunikationsnetzwerk und die Leistungsbauteile sind untereinander potentialfrei. Eine solche Trennung wird üblicherweise dadurch erzielt, dass die Steuersignale für die Leistungsbauteile über galvanisch getrennte Kopplungen übertragen werden. Eine solche Kopplung kann beispielsweise optisch, magnetisch, kapazitiv oder per Funkverbindung erreicht werden. In jedem Fall ist eine solche Lösung aufgrund der Anzahl an zu trennenden Signalwegen mit einem erheblichen Aufwand und entsprechenden Kosten verbunden.

In der DE 198 50 869 A1 ist bei einer Leitungskopplung eine Eingangsleitung mit einer Ausgangsleitung über einen Trennwiderstand verbunden. Parallel zum Trennwiderstand ist ein steuerbarer Schalter angeordnet. Der Schalter wird durch eine Steuerschaltung in Abhängigkeit der ermittelten Ausgangsspannung auf der Ausgangsleitung gesteuert. In einem Bussystem wird eine solche Leitungskopplung zum Verbinden zweier Stationen verwendet.

Es ist Aufgabe der Erfindung, eine wirtschaftliche, d.h. möglichst kostengünstig herstellbare, Steuerelektronik zu schaffen, welche zur Teilnahme an einem Kommunikationsnetzwerk - und zur Steuerung von über ein gegenüber dem Kommunikationsnetzwerk potentialfreies Versorgungsnetz versorgten Lasten eingerichtet ist, wobei das Bezugspotential des ersten Versorgungsnetzes, genannt "ECU_GND", eine Trennimpedanz von bevorzugt mindestens 1 Megaohm zum Bezugspotential des zweiten Versorgungsnetzes, genannt "GND", aufweist.

Diese Aufgabe wird bei der erfindungsgemäßen Steuerelektronik der eingangs angeführten Art dadurch gelöst, dass zumindest ein Schalter eingerichtet ist, das erste Versorgungsnetz mit dem zweiten Versorgungsnetz zu verbinden, sodass die beiden Versorgungsnetze in einem ausgeschalteten Zustand des zumindest einen Schalters zumindest eine festgelegte Mindest-Trennimpedanz aufweisen, insbesondere zumindest eine festgelegte Mindest-Trennimpedanz zwischen den Bezugspotentialen der beiden Versorgungsnetze, d.h. zwischen dem (ersten) Bezugspotential des ersten Versorgungsnetzes und dem (zweiten) Bezugspotential des zweiten Versorgungsnetzes.

Die Erfindung basiert auf der Erkenntnis dass die Potentialfreiheit in der Regel nur im ausgeschalteten oder spannungslosen Zustand des Systems, d.h. des Fahrzeugs, der Maschine oder des "Implements", und bei von einem Systembus getrennter Steuerelektronik definiert und verlangt wird bzw. notwendig ist. In diesem Zustand ist der Schalter geöffnet, sodass die beiden Versorgungsnetze zumindest durch die Mindest-Trennimpedanz getrennt sind. Im eingeschalteten Zustand des Systems kann der Schalter zumindest vorübergehend geschlossen werden, sodass die galvanische Trennung vorübergehend aufgehoben wird und somit eine - vergleichsweise kostengünstige - elektrisch leitende Verbindung zwischen dem Kommunikationsnetzwerk, der Logikschaltung und der Ansteuerung der Lasten sowie den elektrischen Lasten hergestellt wird. Die Kopplung der Steuersignale kann somit über eine oder mehrere elektrisch leitende Verbindungen erfolgen, was den Aufwand und die Herstellungskosten für die Steuerelektronik erheblich reduziert.

Wenn der Schalter ein MOSFET ist, d.h. ein Metall-Oxid-Halbleiter-Feldeffekttransistor, können auf kostengünstige Weise auch hohe Trennimpedanzen realisiert werden. Besonders günstig ist in diesem Zusammenhang die Verwendung eines MOSFETs vom p-Typ, welcher im Allgemeinen eine höhere Trennimpedanz als vergleichbare Schalter vom n-Typ aufweist.

Weiterhin ist es vorteilhaft, wenn die festgelegte Mindest-Trennimpedanz insbesondere zwischen den Bezugspotentialen der beiden Versorgungsnetze zumindest 1 Megaohm beträgt. Mit dieser Mindest-Trennimpedanz entspricht die Steuerelektronik den diesbezüglichen Anforderungen der internationalen Norm ISO 11783 für die Elektronik am Zuggerät und am Arbeitsgerät (Implement). Vorzugsweise kann die festgelegte Mindest-Trennimpedanz gemessen am Systembus und bei von einem Systembus getrennter Steuerelektronik zumindest 5 Megaohm betragen, was den Vorgaben der ISO 11783 für den Systembus (Implementbus) entspricht.

Im Zusammenhang mit der Anordnung des Schalters hat es sich als günstig herausgestellt, wenn der zumindest eine Schalter dem zumindest einen Steuerausgang der Logikschaltung nachgeschaltet ist. Auf diese Weise sind sämtliche Steuerausgänge der Logikschaltung im ausgeschalteten Zustand des Systems bei geöffnetem Schalter (oder - im Fall mehrerer Schalter - wenn alle Schalter geöffnet sind) von den gesteuerten Lasten und dem sie versorgenden zweiten Versorgungsnetz galvanisch getrennt. Die Logikschaltung kann daher über das erste Versorgungsnetz versorgt werden. In diesem Fall ist die Logikschaltung im selben Versorgungsnetz wie die Kommunikationsschaltung angeordnet und kann daher mit letzterer direkt elektrisch leitend verbunden sein. Im eingeschalteten Zustand ist der Schalter (bzw. sind die Schalter) geschlossen und die Steuersignale können über die elektrisch leitenden Verbindungen über den (bzw. die) Schalter zu den gesteuerten Lasten im zweiten Versorgungsnetz übertragen werden.

Alternativ, und gemäß einer bevorzugten Ausführungsform, kann die Logikschaltung über das zweite Versorgungsnetz versorgt werden, wobei der Schalter zwischen den Anschluss für das erste Versorgungsnetz und die Logikschaltung geschaltet ist, sodass die Logikschaltung zur vorübergehenden Versorgung über das erste Versorgungsnetz eingerichtet ist. In diesem Fall ist die Logikschaltung im selben Versorgungsnetz wie die zu steuernden Lasten angeordnet und kann daher mit letzteren direkt elektrisch leitend verbunden sein. D.h., dass die galvanische Bezugspotential-Trennung auf die Schnittstellen-Ebene zwischen Kommunikationsschaltung und Logikschaltung der ECU gesetzt wird, wo eine wesentlich geringere Anzahl von galvanisch getrennten Kopplern anzubringen ist als im Fall einer galvanischen Trennung auf der Schnittstellen-Ebene zwischen der Logikschaltung der ECU und den einzelnen Leistungsschaltern. Es ist daher im einfachsten Fall nur ein Schalter, nämlich zwischen dem Anschluss für das erste Versorgungsnetz und der Logikschaltung, zur galvanischen Trennung erforderlich. Ganz allgemein und unabhängig von der Verwendung eines Schalters ist es bei einer Steuerelektronik der eingangs angeführten Art vorteilhaft, wenn eine galvanische Trennung zwischen der Kommunikationsschaltung und der Logikschaltung vorgesehen ist, weil an dieser Stelle mit vergleichsweise geringem Aufwand eine Kopplung vorgesehen werden kann.

Im Zusammenhang mit einer Steuerelektronik gemäß der letztgenannten Ausführungsform und mit Bezug auf das erfindungsgemäße Verfahren der eingangs angeführten Art ist die Steuerelektronik bevorzugt derart ausgebildet, dass nach einem Zündsignal des land- oder forstwirtschaftlichen Fahrzeugs oder der land- oder forstwirtschaftlichen Maschine das erste Versorgungsnetz mit einer Spannungsversorgung verbunden wird, ausgelöst durch die Spannung am ersten Versorgungsnetz der Schalter der Steuerelektronik geschlossen wird und eine vorübergehende Versorgung der Logikschaltung über das erste Versorgungsnetz vorgesehen wird, anschließend von der Logikschaltung die Versorgung über die Kommunikationsschaltung und den Netzwerkanschluss bestätigt wird, und daraufhin das zweite Versorgungsnetz mit einer Spannungsversorgung verbunden wird. Aufgrund der vorübergehenden Versorgung über das erste Versorgungsnetz, welches in der Regel zuerst mit Spannung versorgt wird, kann die Logikschaltung an einer Initialisierung der am Kommunikationsnetzwerk angeschlossenen Steuerelektroniken des Systems teilnehmen, welche vor der Aktivierung des zweiten Versorgungsnetzes stattfindet. Die Logikschaltung kann somit bereits eine Datenübertragung über den Netzwerkanschluss durchführen, bevor eine Spannung an das zweite Versorgungsnetz angelegt ist. Es ist daher in diesem Fall keine separate Logikschaltung zur Initialisierung des Kommunikationsnetzwerks erforderlich.

Weiterhin ist es im Zusammenhang mit der oben beschriebenen Steuerelektronik mit einem Schalter zwischen dem Anschluss für das erste Versorgungsnetz und der Logikschaltung besonders vorteilhaft, wenn die Steuerelektronik derart ausgebildet ist, dass ausgelöst durch die Spannung am zweiten Versorgungsnetz der Schalter geöffnet und die vorübergehende Versorgung der Logikschaltung über das erste Versorgungsnetz beendet wird, wobei die Kommunikationsschaltung weiterhin vom ersten Versorgungsnetz versorgt wird. Die Steuerelektronik ist daher eingerichtet, nach einem Initialisierungs- oder Einschaltvorgang wieder eine galvanische Trennung zwischen dem Kommunikationsnetzwerk sowie der Kommunikationsschaltung auf der einen Seite und den elektrischen Lasten sowie der Logikschaltung auf der anderen Seite herzustellen.

Um zusätzlich im eingeschalteten Zustand, d.h. im Betrieb des Systems, eine solche galvanische Trennung zwischen der Logikschaltung und der Kommunikationsschaltung zu implementieren, kann die Logikschaltung über einen Transformator, einen Kondensator, einen Optokoppler, einen Lichtwellenleiter oder ein Relais mit der Kommunikationsschaltung gekoppelt sein. Derartige Kopplungen ermöglichen eine Signal- und Datenübertragung ohne eine elektrisch leitende Verbindung zwischen den Teilnehmern. Aufgrund der auf den ersten Blick kontraintuitiven Führung der Trennung zwischen den beiden Schaltungen anstatt - was natürlich erscheint - zwischen der Logikschaltung und den zu steuernden Lasten ist nur eine galvanisch getrennte Signalkopplung erforderlich, was eine erhebliche Kostenersparnis bedeutet.

Die Erfindung wird nachfolgend anhand eines besonders bevorzugten Ausführungsbeispiels, auf das sie jedoch nicht beschränkt sein soll, und unter Bezugnahme auf die Zeichnungen noch weiter erläutert. In den Zeichnungen zeigen im Einzelnen:
Fig. 1 als schematisches Blockschaltbild einen derzeit üblichen Systemaufbau bei einer landwirtschaftlichen Anwendung;
Fig. 2 ein schematisches Blockschaltbild der elektronischen Steuereinheit gemäß Fig. 1 mehr im Detail;
Fig. 3 als schematisches Blockschaltbild einen Systemaufbau bei einer landwirtschaftlichen Anwendung mit untereinander potentialfreien Versorgungsnetzen; und
Fig. 4 ein schematisches Blockschaltbild der elektronischen Steuereinheit gemäß Fig. 3 mehr im Detail und gemäß der vorliegenden Steuerelektronik.

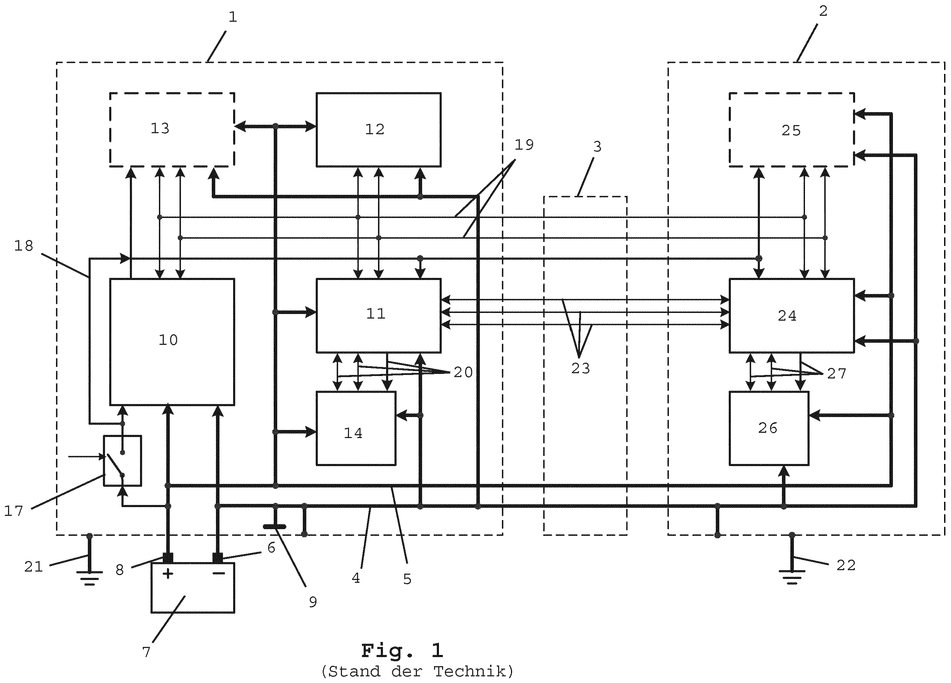

In Fig. 1 ist der Aufbau einer Steuerelektronik einer landwirtschaftlichen Anwendung umfassend einen Traktor 1 oder eine Zugmaschine, ein Arbeitsgerät 2 (z.B. einen Anhänger) und ein Kabelgeschirr 3 zur Verbindung des Arbeitsgeräts 2 mit dem Traktor 1 vereinfacht schematisch dargestellt. Die Anwendung weist nur ein einziges Versorgungsnetz 4, 5 mit einer Masseleitung 4 (oder Referenzleitung) und einer Versorgungsleitung 5 auf. Die Masseleitung 4 ist mit dem Minuspol 6 einer Batterie 7 des Traktors 1 verbunden und die Versorgungsleitung 5 mit dem Pluspol 8 der Batterie 7 verbunden. Die Masseleitung 4 ist außerdem mit dem Gehäuse des Traktors 1 über eine Funktionserdung 9 verbunden. Das Versorgungsnetz 4, 5 versorgt am Traktor 1 sowohl eine zentrale elektronische Traktorsteuereinheit 10 als auch zusätzliche elektronische Steuereinheiten 11, 12, 13 sowie eine lokale Steuereinheit 14.

Die Steuereinheiten 10-14 sind direkt an die Masseleitung 4 angeschlossen, wobei die Gehäuse der Steuereinheiten 10-14 über Funktionserdungen an das Chassis des Traktors oder Anhängers angebunden sein können.

Die Traktorsteuereinheit 10 ist mit einem Zündschalter 17 verbunden, wobei ein Zündsignal über eine von der Versorgungsleitung 5 abgezweigten Zündsignalleitung 18 übertragen wird. Sowohl die Traktorsteuereinheit 10 als auch ein Teil der weiteren Steuereinheiten 11, 13 sind mit der Zündsignalleitung 18 verbunden und eingerichtet, beim Aktivieren der Zündung ein Zündsignal zu empfangen. Alternativ führt die Zündsignalleitung 18 nur in eine erste ECU, und diese ECU verteilt dann ein eigenes, abgeleitetes Zündsignal an die übrigen ECUs im gesamten System. Außerdem sind die Steuereinheiten 11, 12, 13 über ein Datennetzwerk in Form eines zweiadrigen CAN-Busses 19 untereinander sowie mit der Traktorsteuereinheit 10 verbunden. Die lokale Steuereinheit 14 ist nicht direkt mit dem CAN-Bus 19 verbunden. Die Kommunikation mit der lokalen Steuereinheit 14 erfolgt über die mit ihr direkt über lokale Kommunikationsverbindungen 20 und das lokale Zündsignal verbundene Steuereinheit 11, welche als Gateway oder Netzübergang eingerichtet ist.

Das Gehäuse des Traktors 1 ist im dargestellten Aufbau ebenso wie das Gehäuse des Arbeitsgeräts 2 über Erdungen 21, 22 geerdet.

Das Kabelgeschirr 3 umfasst Verbindungsleitungen für das Versorgungsnetz 4, 5, die Zündsignalleitung 18, den CAN-Bus 19 sowie zusätzliche direkte Verbindungsleitungen 23 zwischen der Steuereinheit 11 des Traktors und einer elektronischen Steuereinheit 24 des Arbeitsgeräts 2. Das Arbeitsgerät 2 umfasst abgesehen von dieser Steuereinheit 24 eine weitere optionale elektronische Steuereinheit 25 sowie eine lokale Steuereinheit 26. Die beiden Steuereinheiten 24, 25 sind mit dem Versorgungsnetz 4, 5, der Zündsignalleitung 18 und dem CAN-Bus 19 verbunden. Die lokale Steuereinheit 26 des Arbeitsgeräts 2 ist nicht mit dem CAN-Bus 19 verbunden, sondern ist über lokale Kommunikationsverbindungen 27 und das lokale Zündsignal direkt mit der Steuereinheit 24 verbunden, welche als Gateway für die lokale Steuereinheit 26 fungiert. Außerdem ist die Masseleitung 4 im Arbeitsgerät 2 mit dessen Gehäuse verbunden.

Die Steuereinheiten 10, 11, 12, 13, 24, 25 können durch das Zündsignal aktiviert werden. Alternativ zur dargestellten direkten Verbindung mit dem Zündschalter 17 kann das Zündsignal auch nur von einer Steuereinheit empfangen und an die übrigen Steuereinheiten weitergeleitet werden, wie bei den (lokalen) Steuereinheiten 14, 26 dargestellt.

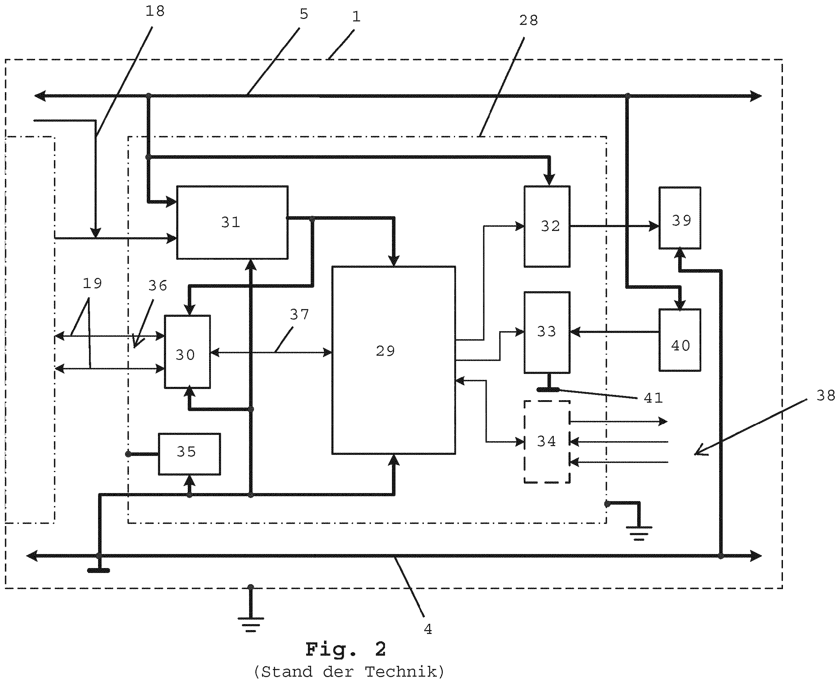

In Fig. 2 ist eine Steuereinheit 28 in der Art der Steuereinheiten 11, 12, 13, 14, 24 oder 25 gemäß Fig. 1 genauer dargestellt. Die dargestellte Steuereinheit 28 umfasst eine Steuerelektronik, welche eine Logikschaltung 29, eine Kommunikationsschaltung 30, eine Versorgungsschaltung 31, zwei Treiberschaltungen 32, 33, eine optionale lokale Kommunikationsschaltung 34 sowie eine Schutzschaltung 35 enthält. Die Versorgungsschaltung 31 der Steuerelektronik bzw. Steuereinheit 28 ist mit der Versorgungsleitung 5 des Traktors 1 (s. Fig. 1) verbunden und versorgt sowohl die Logikschaltung 29 als auch die Kommunikationsschaltung 30 mit Strom. Die Logikschaltung 29 und die Kommunikationsschaltung 30 sind ihrerseits mit der Masseleitung 4 des Traktors 1 verbunden. Sie werden demzufolge über das Versorgungsnetz 4, 5 des Traktors 1 mit Strom versorgt. Die Treiberschaltungen 32, 33 sind direkt in das Versorgungsnetz 4, 5 eingebunden. Die Versorgungsschaltung 31 ist mit der Zündsignalleitung 18 des Traktors 1 verbunden und eingerichtet, die Logikschaltung 29 und die Kommunikationsschaltung 30 nur bei einem anliegenden Zündsignal mit Strom zu versorgen. Die Kommunikationsschaltung 30 ist über einen Netzwerkanschluss 36 mit dem CAN-Bus 19 des Traktors 1 verbunden und zur Datenübertragung über den Netzwerkanschluss 36 und den CAN-Bus 19 eingerichtet. Die Kommunikationsschaltung 30 ist intern über eine lokale Signalleitung 37 mit der Logikschaltung 29 elektrisch verbunden; dasselbe gilt für die Signalverbindungen zwischen der Logikschaltung 29 und den Treiberschaltungen 32, 33 sowie der optionalen lokalen Kommunikationsschaltung 34, welche überdies nach außen einen lokalen Netzwerkanschluss 38 zur Anbindung zumindest einer lokalen Steuereinheit bereitstellt.

Lasten 39, 40 sind an die Treiberschaltungen 32, 33 angeschlossen und mit der Versorgungsleitung 5 und/oder der Masseleitung 4 verbunden. Im Einzelnen wird die Last 39 über die Treiberschaltung 32 versorgt, und sie ist mit der Masseleitung 4 verbunden. Die Last 40 wird direkt über die Versorgungsleitung 5 versorgt und ist über die Treiberschaltung 33 mit der Funktionsmasse 41 verbunden. In der Praxis ist die Treiberschaltung 33 direkt mit der Masseleitung 4 im Steuergerät verbunden, wobei die gezeigte Darstellung lediglich der Übersichtlichkeit dient.

Die Aktivierung der Steuereinheit 28 erfolgt über ein Zündsignal an der Zündsignalleitung 18. Das Zündsignal kann auch zur Versorgung des Logikteils, d.h. der Logikschaltung 29 und der Kommunikationsschaltung 30, genutzt werden, wobei ein festgelegter Laststrom nicht überschritten werden darf. Im Allgemeinen wird bei der in Fig. 2 dargestellten Steuerelektronik die Kommunikationsschaltung 30 und somit die bereitgestellte Kommunikationsschnittstelle, d.h. der CAN-Bus, über das Versorgungsnetz gespeist. Insbesondere ist die Referenz der Bussignale am CAN-Bus die gemeinsame Masseleitung 4. Zum Schutz der Bauteile kann optional eine ESD-Schutzschaltung 35 vorgesehen sein. Eine solche Schutzschaltung 35 ist vor allem dann zweckmäßig, wenn eine spezielle Schutzbehandlung der Steuereinheit 28 bzw. des Traktors 1 oder des Arbeitsgeräts 2, z.B. bei einem statischen Aufladen beim elektrostatischen Lackieren, erfolgen soll.

Die in Fig. 1 und Fig. 2 dargestellten Systeme weisen nur ein einzelnes Versorgungsnetz auf und können daher naturgemäß keine potentialfreien Versorgungsnetze bereitstellen. Sie entsprechen dadurch beispielsweise nicht den Anforderungen in den einschlägigen Normen (s. Einleitung) . Insbesondere kann hier ein Übersprechen von der Versorgung der Lasten auf das Kommunikationsnetzwerk nicht wirksam unterdrückt werden.

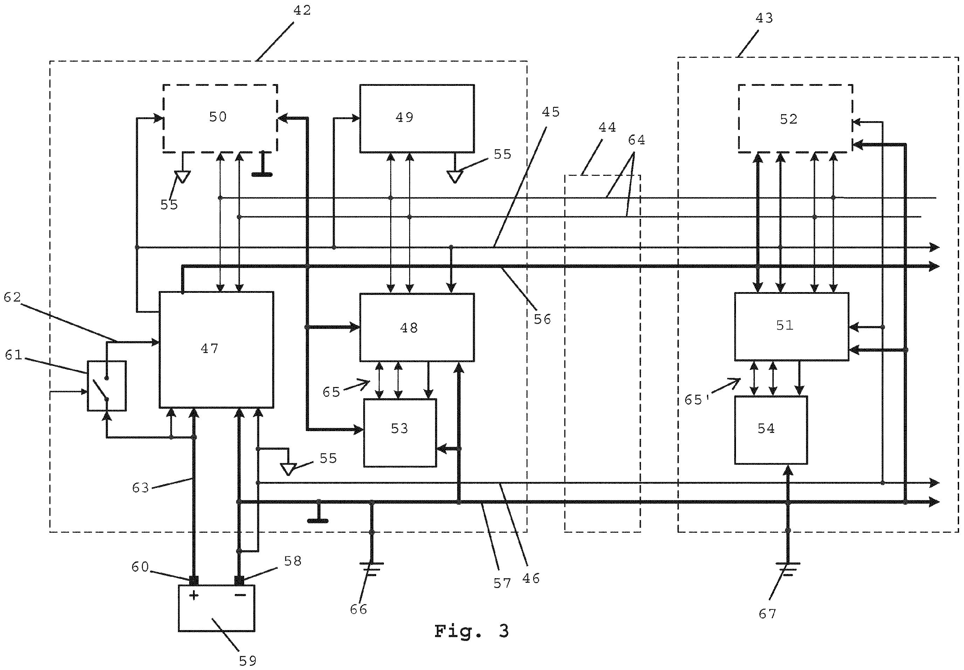

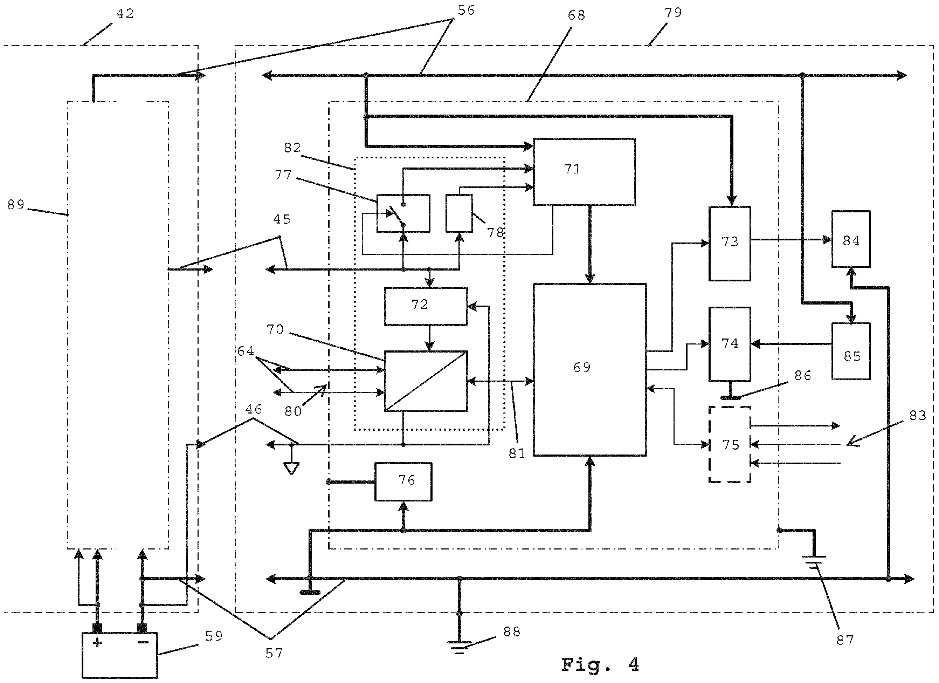

Demgegenüber zeigen Fig. 3 und 4 eine bevorzugte Anwendung und Ausführungsform der vorliegenden Steuerelektronik. In Fig. 3 ist der Aufbau einer Steuerelektronik einer landwirtschaftlichen Anwendung umfassend einen Traktor 42 oder eine Zugmaschine, ein Arbeitsgerät 43 (z.B. ein Anhänger oder ein Anbaugerät) und ein Kabelgeschirr 44 zur Verbindung des Arbeitsgeräts 43 mit dem Traktor 42 vereinfacht schematisch dargestellt. Die gezeigte Architektur ist ISOBUS-konform, weil die gesamte Spannungsversorgung getrennt aufgebaut ist.

Konkret weist die Anwendung gemäß Fig. 3 ein erstes Versorgungsnetz 45, 46 auf, welches eine von einer zentralen elektronischen Traktorsteuereinheit 47 gespeiste Versorgungsleitung 45 und eine eigene Masseleitung 46 umfasst und zur Energieversorgung von zusätzlichen Steuereinheiten 48, 49 sowie einer optionalen Steuereinheit 50 am Traktor 42 und der Steuereinheit 51 sowie der optionalen Steuereinheit 52 am Arbeitsgerät 43 eingerichtet ist. Nicht ISOBUS-konforme lokale Steuereinheiten 53 bzw. 54 am Traktor 42 bzw. am Arbeitsgerät 43 sind nicht mit dem ersten Versorgungsnetz 45, 46 verbunden. Die Versorgungsleitung 45 des ersten Versorgungsnetzes 45, 46 tritt in diesem Aufbau an die Stelle der Zündsignalleitung 18 gemäß Fig. 1 und 2. Die Masseleitung 46 des ersten Versorgungsnetzes 45, 46 ist durch eine zusätzliche Leitung gegenüber dem zuvor gezeigten System (Fig. 1 und 2) gebildet. Zwecks einer besseren Übersichtlichkeit sind manche Steuereinheiten 49, 50 nicht direkt mit der Masseleitung 46 des ersten Versorgungsnetzes 45, 46 verbunden, sondern die Verbindung ist als Äquipotential 55 dargestellt. In der Praxis sind immer alle Steuereinheiten, die ISOBUS-konform sind, direkt mit der Masseleitung 46 verbunden; die Darstellung stellt lediglich eine zeichnerische Vereinfachung dar.

Außerdem weist die Anwendung ein zweites Versorgungsnetz 56, 57 auf, welches eine Versorgungsleitung 56 und eine Masseleitung 57 umfasst und zur Versorgung der Steuereinheiten 47, 48 und 50-52 (die zusätzliche Steuereinheit 49 hat keine Lasten zu steuern und ist daher nur mit dem ersten Versorgungsnetz verbunden) sowie der lokalen Steuereinheiten 53, 54 eingerichtet ist. Die Masseleitung 46 des ersten Versorgungsnetzes 45, 46 ist von der Masseleitung 57 des zweiten Versorgungsnetzes 56, 57 mit Ausnahme einer Verbindungsstelle am Minuspol 58 einer Batterie 59 des Traktors 42 galvanisch getrennt, wobei die Trennimpedanz für die Steuergeräte am Traktor 42 und am Arbeitsgerät 43 größer als 1 MOhm ist und die Trennimpedanz zwischen den Masseleitungen 46, 57 gemessen am Systembus (Implementbus) im spannungslosen Zustand sowie ohne angeschlossene Steuerelektronik größer als 5 MOhm ist. Die Versorgungsleitung 56 des zweiten Versorgungsnetzes 56, 57 ist über die Traktorsteuereinheit 47 und die gemeinsame Versorgungsleitung 63 mit dem Pluspol 60 der Batterie 59 verbunden. Die Traktorsteuereinheit 47 ist mit einem Zündschalter 61 verbunden, wobei ein Zündsignal über eine von der gemeinsamen Versorgungsleitung 63 abgezweigte Zündsignalleitung 62 übertragen wird. Außerdem sind die Steuereinheiten 48-52 über ein Datennetzwerk in Form eines zweiadrigen CAN-Busses 64 untereinander sowie mit der Traktorsteuereinheit 47 verbunden. Die lokalen Steuereinheiten 53, 54 sind nicht mit dem CAN-Bus 64 verbunden, sondern zur Kommunikation über eine der Steuereinheiten 48 bzw. 51 eingerichtet und über lokale Steuerleitungen 65, 65' direkt mit der jeweiligen Steuereinheit 48 bzw. 51 verbunden, sodass die Steuereinheiten 48, 51 als Gateway fungieren. Das Gehäuse des Traktors 42 ist im dargestellten Aufbau ebenso wie das Gehäuse des Arbeitsgeräts 43 über Erdungen 66, 67 geerdet.

Das Arbeitsgerät 43 ist mit dem Traktor 42 über das Kabelgeschirr 44 verbunden. Das Kabelgeschirr 44 umfasst Verbindungsleitungen für das erste Versorgungsnetz 45, 46, das zweite Versorgungsnetz 56, 57 und den CAN-Bus 64. Selbstverständlich können zusätzliche Verbindungsleitungen vorgesehen sein.

Beim Aktivieren der Zündung stellt die Traktorsteuereinheit 47 eine Versorgungsspannung am ersten Versorgungsnetz 45, 46 her, indem es die Versorgungsleitung 45 des ersten Versorgungsnetzes 45, 46 mit der zentralen Versorgungsleitung 63 verbindet. Die über das erste Versorgungsnetz 45, 46 versorgten Steuereinheiten 48-52 werden dadurch aktiviert und bestätigen die über das erste Versorgungsnetz 45, 46 hergestellte Spannungsversorgung über den CAN-Bus 64. Daraufhin stellt die Traktorsteuereinheit 47 eine Versorgungsspannung am zweiten Versorgungsnetz 56, 57 her, indem sie die Versorgungsleitung 56 des zweiten Versorgungsnetzes 56, 57 mit der zentralen Versorgungsleitung 63 verbindet.

In Fig. 4 ist eine erfindungsgemäße Steuerelektronik mit einer Steuereinheit 68 in der Art der Steuereinheiten 48-52 gemäß Fig. 3 - unter Weglassung des Kabelgeschirrs 44 - genauer dargestellt. Die dargestellte Steuereinheit 68 umfasst eine Steuerelektronik, welche eine Logikschaltung 69, eine Kommunikationsschaltung 70, eine zentrale Versorgungsschaltung 71, eine lokale Versorgungsschaltung 72, zwei Treiberschaltungen 73, 74, eine optionale lokale Kommunikationsschaltung 75, eine Schutzschaltung 76, einen Schalter 77 und einen Spannungsdetektor 78 enthält. Die zentrale Versorgungsschaltung 71 der Steuerelektronik ist mit der Versorgungsleitung 56 des zweiten Versorgungsnetzes 56, 57 der Anwendung 79, d.h. des Traktors 42 oder des Arbeitsgeräts 43, verbunden und versorgt die Logikschaltung 69 mit Strom. Die Logikschaltung 69 ist ihrerseits mit der Masseleitung 57 des zweiten Versorgungsnetzes 56, 57 der Anwendung 79 verbunden. Sie wird demzufolge über das zweite Versorgungsnetz 56, 57 des Traktors 42 über dessen Traktorsteuereinheit 47 und dessen Batterie 59 mit Strom versorgt. Die Treiberschaltungen 73, 74 sind direkt in das zweite Versorgungsnetz 56, 57 eingebunden.

Die zentrale Versorgungsschaltung 71 ist zusätzlich über den Schalter 77 mit der Versorgungsleitung 45 des ersten Versorgungsnetzes 45, 46 des Traktors 42 verbunden und eingerichtet, die Logikschaltung 69 bei geschlossenem Schalter 77 aus dem ersten Versorgungsnetz 45, 46 mit Strom zu versorgen.

Die lokale Versorgungsschaltung 72 der Steuerelektronik ist mit der Versorgungsleitung 45 des ersten Versorgungsnetzes 45, 46 der Anwendung 79 verbunden und versorgt die Kommunikationsschaltung 70 mit Strom. Die Kommunikationsschaltung 70 ist ihrerseits mit der Masseleitung 46 des ersten Versorgungsnetzes 45, 46 der Anwendung 79 verbunden. Sie wird demzufolge über das erste Versorgungsnetz 45, 46 des Traktors 42 mit Strom versorgt. Die Kommunikationsschaltung 70 ist über einen Netzwerkanschluss 80 mit dem CAN-Bus 64 des Traktors 42 verbunden und zur Datenübertragung über den Netzwerkanschluss 80 und den CAN-Bus 64 eingerichtet. Die Kommunikationsschaltung 30 ist intern über eine lokale Signalverbindung 81 galvanisch isoliert mit der Logikschaltung 69 gekoppelt.

Die Kopplung ist eine Signalkopplung zwischen den bei offenem Schalter 77 galvanisch getrennten Schaltungen 69, 70 der Steuerelektronik. Die Kopplung ist vorzugsweise über einen Optokoppler hergestellt. Die Kommunikationsschaltung 70, die lokale Versorgungsschaltung 72, der Schalter 77 und der Spannungsdetektor 78 bilden somit einen - bei geöffnetem Schalter 77 - mit definierter Trennimpedanz gegenüber der Logikschaltung 69 und den Treiberschaltungen 73, 74 getrennten Bereich 82 der Steuerelektronik. Die Verbindungen zwischen der Logikschaltung 69 und den Treiberschaltungen 73, 74 sowie der lokalen Kommunikationsschaltung 75, welche nach außen einen lokalen Netzwerkanschluss 83 z.B. zum Anschluss zumindest einer lokalen Steuereinheit bereitstellt, sind leitende elektrische Verbindungen.

An die Treiberschaltungen 73, 74 sind elektrische Lasten 84, 85, z.B. elektrische Aktuatoren oder Beleuchtungseinrichtungen, angeschlossen und mit der Versorgungsleitung 56 und/oder der Masseleitung 57 des zweiten Versorgungsnetzes 56, 57 verbunden. Im Einzelnen wird die eine Last 84 über die Treiberschaltung 73 versorgt, und sie ist mit der Masseleitung 57 des zweiten Versorgungsnetzes 56, 57 verbunden. Die andere Last 85 wird direkt über die Versorgungsleitung 56 versorgt und ist über die Treiberschaltung 74 mit Funktionsmasse 86 verbunden.

Da bei der in Fig. 4 dargestellten Steuerelektronik die Kommunikationsschaltung 70 und somit die bereitgestellte Kommunikationsschnittstelle, d.h. der CAN-Bus 64, über das erste Versorgungsnetz 45, 46 gespeist wird, ist die Referenz der Bussignale am CAN-Bus 64 die Masseleitung 46 des ersten Versorgungsnetzes 45, 46. Ein Übersprechen von Signalen ausgehend von den Lasten 84, 85 auf den CAN-Bus 64 kann ausgeschlossen oder zumindest stark gedämpft werden, weil die Lasten 84, 85 auf die galvanisch getrennte Masseleitung 57 des zweiten Versorgungsnetzes 56, 57 bezogen sind. Dadurch können Störungen am Kommunikationsnetz reduziert werden. Zum Schutz der Bauteile kann optional die ESD-Schutzschaltung 76 vorgesehen sein. Eine solche Schutzschaltung 76 ist - wie erwähnt - vor allem dann zweckmäßig, wenn eine spezielle Behandlung der Steuereinheit 69 bzw. der Anwendung 79, z.B. statisches Aufladen beim elektrostatischen Lackieren, erfolgt. Die Schutzschaltung 76 ist zusammen mit der Steuereinheit 68 mit der Erdung 87 verbunden. Die Masseleitung 57 des zweiten Versorgungsnetzes 56, 57 ist über das Gehäuse der Anwendung 79 und die Erdung 88 geerdet. Die Steuerelektronik 89 des Traktors 42 ist in Fig. 4 nur andeutungsweise eingezeichnet, wobei für mehr Einzelheiten auf die Ausführungen im Zusammenhang mit Fig. 3, insbesondere die dort beschriebene Traktorsteuereinheit 47, verwiesen wird.

Das Aktivieren der Zündung, vgl. Fig. 3, führt - wie oben bereits angedeutet - zum Einschalten der Steuerelektronik der verbundenen Steuereinheit 68 gemäß Fig. 4. Dabei wird eine am ersten Versorgungsnetz 45, 46 anliegende Spannung vom Spannungsdetektor 78 detektiert und ein entsprechendes Signal an die zentrale Versorgungsschaltung 71 weitergegeben. Die zentrale Versorgungsschaltung 71 schließt daraufhin den Schalter 77 und stellt dadurch eine vorübergehende Versorgung der Logikschaltung 69 über die Versorgungsleitung 45 des ersten Versorgungsnetzes 45, 46 und die Masseleitung 57 des zweiten Versorgungsnetzes 56, 57 her. Die Kommunikationsschaltung 70 wird von der Versorgungsleitung 45 und der Masseleitung 46 des ersten Versorgungsnetzes 45, 46 gespeist. Die so versorgte Logikschaltung 69 bestätigt ihre Versorgung über die lokale Signalleitung 81 und die Kommunikationsschaltung 70, d.h. durch Absenden einer entsprechenden Mitteilung am CAN-Bus 64. Sobald die Versorgung am zweiten Versorgungsnetz 56, 57 hergestellt wird, erkennt dies die zentrale Versorgungsschaltung 71, und sie öffnet den Schalter 77. Ab diesem Zeitpunkt wird die Logikschaltung 60 über das zweite Versorgungsnetz 56, 57 versorgt, und sie ist von der Kommunikationsschaltung 70 und dem CAN-Bus 64 galvanisch getrennt. Die zentrale Versorgungsschaltung 71 ist zudem eingerichtet, bei vorübergehenden Ausfällen der Versorgung am zweiten Versorgungsnetz 56, 57 den Schalter 77 erneut für die Dauer des Ausfalls zu schließen und so eine unterbrechungsfreie Versorgung der Logikschaltung 69 sicherzustellen. Dasselbe gilt für einen festgelegten Zeitraum, z.B. zwei Sekunden, nach Ausschalten der Zündung, währenddessen die Versorgung am zweiten Versorgungsnetz 56, 57 bereits beendet ist und die Versorgung am ersten Versorgungsnetz 45, 46 aufrecht erhalten wird.

Während der Schalter 77 geschlossen ist, ist zwar die galvanische Trennung zwischen den Versorgungsnetzen aufgehoben, allerdings ist der Schalter 77 bei der oben beschriebenen bevorzugten Ausführungsform im Wesentlichen nur während jener Zeiträume geschlossen, zu denen am zweiten Versorgungsnetz 56, 57 keine Spannung anliegt. D.h. in diesem Zeitraum können naturgemäß die ausschließlich über das zweite Versorgungsnetz 56, 57 versorgten Lasten nicht versorgt und somit nicht betrieben werden und es kann demzufolge auch nicht zu einem Übersprechen auf den CAN-Bus kommen.

Der Schalter 77 ist in diesem Ausführungsbeispiel ein MOSFET vom p-Typ mit einer Impedanz im ausgeschalteten Zustand von z.B. 5 oder 10 MOhm. Die Anforderungen der ISO 11783 werden somit bei der gezeigten Steuerelektronik dadurch erfüllt, dass der Schalter 77 im spannungslosen Zustand des Systems geöffnet ist und somit die Mindest-Trennimpedanz zwischen den Versorgungsnetzen, d.h. insbesondere zwischen den Masseleitungen 46, 57 der Versorgungsnetze, eingehalten wird.

### Bezugszeichenliste

- 1: Traktor
- 2: Arbeitsgerät
- 3: Kabelgeschirr
- 4: Masseleitung
- 5: Versorgungsleitung
- 6: Minuspol
- 7: Batterie
- 8: Pluspol
- 9: Funktionserdung
- 10: Traktorsteuereinheit
- 11, 12, 13: Steuereinheiten Traktor
- 14: lokale Steuereinheit

- 17: Zündschalter
- 18: Zündsignalleitung
- 19: CAN-Bus
- 20: lokale Kommunikationsverbindungen
- 21: Erdungen
- 22: Erdungen
- 23: direkte Verbindungsleitungen
- 24, 25, 26: Steuereinheiten Arbeitsgerät
- 27: lokale Kommunikationsverbindungen
- 28: Steuereinheit
- 29: Logikschaltung
- 30: Kommunikationsschaltung
- 31: Versorgungsschaltung
- 32, 33: Treiberschaltungen
- 34: Kommunikationsschaltung
- 35: Schützschaltung (ESD-)
- 36: Netzwerkanschluss
- 37: lokale Signalleitung
- 38: lokaler Netzwerkanschluss
- 39, 40: Lasten

- 42: Traktor
- 43: Arbeitsgerät
- 44: Kabelgeschirr
- 45: Versorgungsleitung
- 46: Masseleitung
- 47: Traktorsteuereinheit
- 48, 49: Steuereinheiten Traktor
- 50: optionale Steuereinheit Traktor
- 51: Steuereinheit Arbeitsgerät
- 52: optionale Steuereinheit Arbeitsgerät
- 53, 54: lokale Steuereinheiten Traktor
- 55: Äquipotential
- 56: Versorgungsleitung
- 57: Masseleitung
- 58: Minuspol
- 59: Batterie
- 60: Pluspol
- 61: Zündschalter
- 62: Zündsignalleitung
- 63: Versorgungsleitung
- 64: CAN-Bus
- 65, 65': lokale Steuerleitungen

- 68: Steuereinheit
- 69: Logikschaltung
- 70: Kommunikationsschaltung
- 71: zentrale Versorgungsschaltung
- 72: lokale Versorgungsschaltung
- 73, 74: Treiberschaltungen
- 75: lokale Kommunikationsschaltung
- 76: Schutzschaltung
- 77: Schalter
- 78: Spannungsdetektor
- 79: Anwendung
- 80: Netzwerkanschluss
- 81: lokale Signalverbindung
- 82: getrennter Bereich
- 83: Netzwerkanschluss
- 84, 85: Lasten
- 86: Masse
- 87, 88: Erdung
- 89: Steuerelektronik Traktor

## Patentansprüche

1. Steuerelektronik für ein land- oder forstwirtschaftliches Fahrzeug oder eine land- oder forstwirtschaftliche Maschine, mit Stromanschlüssen zumindest für ein erstes Versorgungsnetz (45,46) und ein zweites Versorgungsnetz (56, 57) und mit zumindest einem Netzwerkanschluss (80), wobei die Steuerelektronik eine Kommunikationsschaltung (70), die zur Datenübertragung über den Netzwerkanschluss (80) eingerichtet ist und über das erste Versorgungsnetz (45, 46) versorgt wird, und eine Logikschaltung (69) enthält, die mit der Kommunikationsschaltung (70) gekoppelt ist und zumindest einen Steuerausgang zur Steuerung einer über das zweite Versorgungsnetz (56, 57) versorgten elektrischen Last (84, 85) aufweist, wobei die Steuerelektronik zumindest einen Schalter (77) aufweist, der eingerichtet ist, das erste Versorgungsnetz (45, 46) mit dem zweiten Versorgungsnetz (56, 57) zu verbinden, sodass die beiden Versorgungsnetze (45, 46, 56, 57) in einem ausgeschalteten Zustand des zumindest einen Schalters (77) zumindest eine festgelegte Mindest-Trennimpedanz aufweisen.

2. Steuerelektronik nach Anspruch 1, **dadurch gekennzeichnet, dass** der Schalter (77) ein MOSFET ist.

3. Steuerelektronik nach Anspruch 2, **dadurch gekennzeichnet, dass** der MOSFET vom p-Typ ist.

4. Steuerelektronik nach einem der Ansprüche 1 bis 3, **dadurch gekennzeichnet, dass** die festgelegte Mindest-Trennimpedanz zwischen den Bezugspotentialen der beiden Versorgungsnetze (45, 46, 56, 57) zumindest 1 Megaohm beträgt.

5. Steuerelektronik nach einem der Ansprüche 1 bis 4, **dadurch gekennzeichnet, dass** der zumindest eine Schalter dem zumindest einen Steuerausgang der Logikschaltung (69) nachgeschaltet ist.

6. Steuerelektronik nach einem der Ansprüche 1 bis 4, **dadurch gekennzeichnet, dass** die Logikschaltung (69) über das zweite Versorgungsnetz (56, 57) versorgt wird, wobei der Schalter (77) zwischen den Anschluss für das erste Versorgungsnetz (45, 46) und die Logikschaltung (69) geschaltet ist, sodass die Logikschaltung (69) zur vorübergehenden Versorgung über das erste Versorgungsnetz (45, 46) eingerichtet ist.

7. Steuerelektronik nach Anspruch 6, **dadurch gekennzeichnet, dass** die Logikschaltung (69) über einen Transformator, einen Kondensator, einen Optokoppler, einen Lichtwellenleiter oder ein Relais mit der Kommunikationsschaltung (70) gekoppelt ist.

8. Steuerelektronik nach Anspruch 6 oder Anspruch 7, **dadurch gekennzeichnet, dass** die Steuerelektronik derart ausgebildet ist, dass nach einem Zündsignal des land- oder forstwirtschaftlichen Fahrzeugs oder der land- oder forstwirtschaftlichen Maschine das erste Versorgungsnetz (45, 46) mit einer Spannungsversorgung verbunden wird, ausgelöst durch die Spannung am ersten Versorgungsnetz (45, 46) der Schalter (77) der Steuerelektronik geschlossen wird und eine vorübergehende Versorgung der Logikschaltung (69) über das erste Versorgungsnetz (45, 46) vorgesehen wird, von der Logikschaltung (69) die hergestellte Versorgung über die Kommunikationsschaltung (70) und den Netzwerkanschluss (80) bestätigt wird und daraufhin das zweite Versorgungsnetz (56, 57) mit einer Spannungsversorgung verbunden wird.

9. Steuerelektronik nach Anspruch 8, **dadurch gekennzeichnet, dass** die Steuerelektronik derart ausgebildet ist, dass ausgelöst durch die Spannung am zweiten Versorgungsnetz (56, 57) der Schalter (77) geöffnet und die vorübergehende Versorgung der Logikschaltung (69) über das erste Versorgungsnetz (45, 46) beendet wird, wobei die Kommunikationsschaltung (70) weiterhin vom ersten Versorgungsnetz (45, 46) versorgt wird.

10. Verfahren zum Einschalten einer Steuerelektronik für ein land- oder forstwirtschaftliches Fahrzeug oder eine land- oder forstwirtschaftliche Maschine, mit Stromanschlüssen zumindest für ein erstes Versorgungsnetz (45,46) und ein zweites Versorgungsnetz (56, 57) und mit zumindest einem Netzwerkanschluss (80), wobei die Steuerelektronik eine Kommunikationsschaltung (70), die zur Datenübertragung über den Netzwerkanschluss (80) eingerichtet ist und über das erste Versorgungsnetz (45, 46) versorgt wird, und eine Logikschaltung (69) enthält, die mit der Kommunikationsschaltung (70) gekoppelt ist und zumindest einen Steuerausgang zur Steuerung einer über das zweite Versorgungsnetz (56, 57) versorgten elektrischen Last (84, 85) aufweist, wobei die Steuerelektronik zumindest einen Schalter (77) aufweist, der eingerichtet ist, das erste Versorgungsnetz (45, 46) mit dem zweiten Versorgungsnetz (56, 57) zu verbinden, sodass die beiden Versorgungsnetze (45, 46, 56, 57) in einem ausgeschalteten Zustand des zumindest einen Schalters (77) zumindest eine festgelegte Mindest-Trennimpedanz aufweisen und wobei die Logikschaltung (69) über das zweite Versorgungsnetz (56, 57) versorgt wird, wobei der Schalter (77) zwischen den Anschluss für das erste Versorgungsnetz (45, 46) und die Logikschaltung (69) geschaltet ist, sodass die Logikschaltung (69) zur vorübergehenden Versorgung über das erste Versorgungsnetz (45, 46) eingerichtet ist, wobei
a) nach einem Zündsignal des land- oder forstwirtschaftlichen Fahrzeugs oder der land- oder forstwirtschaftlichen Maschine das erste Versorgungsnetz (45, 46) mit einer Spannungsversorgung verbunden wird,
b) ausgelöst durch die Spannung am ersten Versorgungsnetz (45, 46) der Schalter (77) der Steuerelektronik geschlossen und
c) eine vorübergehende Versorgung der Logikschaltung (69) über das erste Versorgungsnetz (45, 46) vorgesehen wird,
d) von der Logikschaltung (69) die hergestellte Versorgung über die Kommunikationsschaltung (70) und den Netzwerkanschluss (80) bestätigt wird, und
e) daraufhin das zweite Versorgungsnetz (56, 57) mit einer Spannungsversorgung verbunden wird.

11. Verfahren nach Anspruch 10, **dadurch gekennzeichnet, dass** f) ausgelöst durch die Spannung am zweiten Versorgungsnetz (56, 57) der Schalter (77) geöffnet und
g) die vorübergehende Versorgung der Logikschaltung (69) über das erste Versorgungsnetz (45, 46) beendet wird, wobei die Kommunikationsschaltung (70) weiterhin vom ersten Versorgungsnetz (45, 46) versorgt wird.

## Claims

1. Control electronics for an agricultural or forestry vehicle or an agricultural or forestry machine, having power connections at least for a first supply network (45, 46) and a second supply network (56, 57) and having at least one network connection (80), wherein the control electronics contain a communication circuit (70) which is configured to transmit data via the network connection (80) and is supplied via the first supply network (45, 46), and a logic circuit (69) which is coupled to the communication circuit (70) and has at least one control output for controlling an electrical load (84, 85) supplied via the second supply network (56, 57), wherein the control electronics have at least one switch (77) which is configured to connect the first supply network (45, 46) to the second supply network (56, 57), with the result that the two supply networks (45, 46, 56, 57) have at least one defined minimum isolation impedance in a switched-off state of the at least one switch (77).

2. Control electronics according to Claim 1, **characterized in that** the switch (77) is a MOSFET.

3. Control electronics according to Claim 2, **characterized in that** the MOSFET is of the p-type.

4. Control electronics according to one of Claims 1 to 3, **characterized in that** the defined minimum isolation impedance between the reference potentials of the two supply networks (45, 46, 56, 57) is at least 1 Megaohm.

5. Control electronics according to one of Claims 1 to 4, **characterized in that** the at least one switch is connected downstream of the at least one control output of the logic circuit (69).

6. Control electronics according to one of Claims 1 to 4, **characterized in that** the logic circuit (69) is supplied via the second supply network (56, 57), wherein the switch (77) is connected between the connection for the first supply network (45, 46) and the logic circuit (69), with the result that the logic circuit (69) is configured to provide a temporary supply via the first supply network (45, 46).

7. Control electronics according to Claim 6, **characterized in that** the logic circuit (69) is coupled to the communication circuit (70) via a transformer, a capacitor, an optocoupler, an optical waveguide or a relay.

8. Control electronics according to Claim 6 or Claim 7, **characterized in that** the control electronics are embodied in such a way that after an ignition signal of the agricultural or forestry vehicle or of the agricultural or forestry machine the first supply network (45, 46) is connected to a voltage supply, the switch (77) of the control electronics is closed having been triggered by the voltage at the first supply network (45, 46), and a temporary supply of the logic circuit (69) is provided via the first supply network (45, 46), the logic circuit (69) confirms the established supply via the communication circuit (70) and the network connection (80), and the second supply network (56, 57) is subsequently connected to a voltage supply.

9. Control electronics according to Claim 8, **characterized in that** the control electronics are embodied in such a way that the switch (77) is opened having been triggered by the voltage at the second supply network (56, 57), and the temporary supply of the logic circuit (69) via the first supply network (45, 46) is ended, wherein the communication circuit (70) continues to be supplied by the first supply network (45, 46).

10. Method for switching on control electronics for an agricultural or forestry vehicle or an agricultural or forestry machine, having power connections at least for a first supply network (45, 46) and a second supply network (56, 57) and having at least one network connection (80), wherein the control electronics contain a communication circuit (70) which is configured to transmit data via the network connection (80) and is supplied via the first supply network (45, 46), and a logic circuit (69) which is coupled to the communication circuit (70) and has at least one control output for controlling an electrical load (84, 85) supplied via the second supply network (56, 57), wherein the control electronics have at least one switch (77) which is configured to connect the first supply network (45, 46) to the second supply network (56, 57), with the result that the two supply networks (45, 46, 56, 57) have at least one defined minimum isolation impedance in a switched-off state of the at least one switch (77), and wherein the logic circuit (69) is supplied via the second supply network (56, 57), wherein the switch (77) is connected between the connection for the first supply network (45, 46) and the logic circuit (69) with the result that the logic circuit (69) is configured to provide a temporary supply via the first supply network (45, 46), wherein
a) after an ignition signal of the agricultural or forestry vehicle or of the agricultural or forestry machine the first supply network (45, 46) is connected to a voltage supply,
b) the switch (77) of the control electronics is closed having been triggered by the voltage at the first supply network (45, 46), and
c) a temporary supply of the logic circuit (69) is provided via the first supply network (45, 46),
d) the logic circuit (69) confirms the established supply via the communication circuit (70) and the network connection (80), and
e) the second supply network (56, 57) is subsequently connected to a voltage supply.

11. Method according to Claim 10, **characterized in that** f) the switch (77) is opened having been triggered by the voltage at the second supply network (56, 57), and
g) the temporary supply of the logic circuit (69) via the first supply network (45, 46) is ended, wherein the communication circuit (70) continues to be supplied by the first supply network (45, 46).

## Revendications

1. Électronique de commande pour un véhicule agricole ou forestier ou une machine agricole ou forestière, comprenant des bornes électriques au moins pour un premier réseau d'alimentation (45, 46) et un deuxième réseau d'alimentation (56, 57) et comprenant au moins une borne de réseau (80), l'électronique de commande contenant un circuit de communication (70), qui est conçu pour la transmission de données par le biais de la borne de réseau (80) et qui est alimenté par le biais du premier réseau d'alimentation (45, 46), et un circuit logique (69) qui est connecté au circuit de communication (70) et possède au moins une sortie de commande destinée à commander une charge électrique (84, 85) alimentée par le biais du deuxième réseau d'alimentation (56, 57), l'électronique de commande possédant au moins un commutateur (77) qui est conçu pour relier le premier réseau d'alimentation (45, 46) au deuxième réseau d'alimentation (56, 57) de sorte que les deux réseaux d'alimentation (45, 46, 56, 57), dans un état déconnecté de l'au moins un commutateur (77), présentent au moins une impédance de séparation minimale fixée.

2. Électronique de commande selon la revendication 1, **caractérisée en ce que** le commutateur (77) est un MOSFET.

3. Électronique de commande selon la revendication 2, **caractérisée en ce que** le MOSFET est du type P.

4. Électronique de commande selon l'une des revendications 1 à 3, **caractérisée en ce que** l'impédance de séparation minimale fixée entre les potentiels de référence des deux réseaux d'alimentation (45, 46, 56, 57) est d'au moins 1 mégohm.

5. Électronique de commande selon l'une des revendications 1 à 4, **caractérisée en ce que** l'au moins un commutateur est branché en aval de l'au moins une sortie de commande du circuit logique (69).

6. Électronique de commande selon l'une des revendications 1 à 4, **caractérisée en ce que** le circuit logique (69) est alimenté par le biais du deuxième réseau d'alimentation (56, 57), le commutateur (77) étant commuté entre la borne pour le premier réseau d'alimentation (45, 46) et le circuit logique (69), de sorte que le circuit logique (69) est conçu pour être alimenté temporairement par le biais du premier réseau d'alimentation (45, 46).

7. Électronique de commande selon la revendication 6, **caractérisée en ce que** le circuit logique (69) est connecté au circuit de communication (70) par le biais d'un transformateur, d'un condensateur, d'un optocoupleur, d'une fibre optique ou d'un relais.

8. Électronique de commande selon la revendication 6 ou la revendication 7, **caractérisée en ce que** l'électronique de commande est configurée de telle sorte qu'après un signal d'allumage du véhicule agricole ou forestier ou de la machine agricole ou forestière, le premier réseau d'alimentation (45, 46) est relié à une source de tension, la fermeture du commutateur (77) de l'électronique de commande est déclenchée par la tension au niveau du premier réseau d'alimentation (45, 46) et une alimentation temporaire du circuit logique (69) est réalisée par le biais du premier réseau d'alimentation (45, 46), l'alimentation établie est confirmée par le circuit logique (69) par le biais du circuit de communication (70) et la borne de réseau (80) et, sur ce fait, le deuxième réseau d'alimentation (56, 57) est relié à une source de tension.

9. Électronique de commande selon la revendication 8, **caractérisée en ce que** l'électronique de commande est configurée de telle sorte que l'ouverture du commutateur (77) est déclenchée par la tension au niveau du deuxième réseau d'alimentation (56, 57) et l'alimentation temporaire du circuit logique (69) par le biais du premier réseau d'alimentation (45, 46) est terminée, l'alimentation du circuit de communication (70) par le biais du premier réseau d'alimentation (45, 46) se poursuivant.

10. Procédé de mise en circuit d'une électronique de commande pour un véhicule agricole ou forestier ou une machine agricole ou forestière, comprenant des bornes électriques au moins pour un premier réseau d'alimentation (45, 46) et un deuxième réseau d'alimentation (56, 57) et comprenant au moins une borne de réseau (80), l'électronique de commande contenant un circuit de communication (70), qui est conçu pour la transmission de données par le biais de la borne de réseau (80) et qui est alimenté par le biais du premier réseau d'alimentation (45, 46), et un circuit logique (69) qui est connecté au circuit de communication (70) et possède au moins une sortie de commande destinée à commander une charge électrique (84, 85) alimentée par le biais du deuxième réseau d'alimentation (56, 57), l'électronique de commande possédant au moins un commutateur (77) qui est conçu pour relier le premier réseau d'alimentation (45, 46) au deuxième réseau d'alimentation (56, 57) de sorte que les deux réseaux d'alimentation (45, 46, 56, 57), dans un état déconnecté de l'au moins un commutateur (77), présentent au moins une impédance de séparation minimale fixée et le circuit logique (69) est alimenté par le biais du deuxième réseau d'alimentation (56, 57), le commutateur (77) étant commuté entre la borne pour le premier réseau d'alimentation (45, 46) et le circuit logique (69), de sorte que le circuit logique (69) est conçu pour être alimenté temporairement par le biais du premier réseau d'alimentation (45, 46),
a) le premier réseau d'alimentation (45, 46) étant relié à une source de tension après un signal d'allumage du véhicule agricole ou forestier ou de la machine agricole ou forestière,
b) la fermeture du commutateur (77) de l'électronique de commande étant déclenchée par la tension au niveau du premier réseau d'alimentation (45, 46) et
c) une alimentation temporaire du circuit logique (69) étant réalisée par le biais du premier réseau d'alimentation (45, 46),
d) l'alimentation établie étant confirmée par le circuit logique (69) par le biais du circuit de communication (70) et la borne de réseau (80) et
e) sur ce fait, le deuxième réseau d'alimentation (56, 57) étant relié à une source de tension.

11. Procédé selon la revendication 10, **caractérisé en ce que**
f) l'ouverture du commutateur (77) est déclenchée par la tension au niveau du deuxième réseau d'alimentation (56, 57) et
g) l'alimentation temporaire du circuit logique (69) par le biais du premier réseau d'alimentation (45, 46) est terminée, l'alimentation du circuit de communication (70) par le biais du premier réseau d'alimentation (45, 46) se poursuivant.
